# EUROPEAN PATENT APPLICATION

(11) **EP 4 087 093 A1**
(43) Date of publication of application: **09.11.2022**
(21) Application number: 20909846.6
(22) Date of filing: 30.09.2020
(51) Int. Cl.: H02K 1/27

(54) **ROTOR CORE AND MOTOR HAVING SAID ROTOR CORE**

(30) Priority: 31.12.2019 CN 201911408814
(71) Applicant: Nidec Corporation, Kyoto-shi, Kyoto 601-8205 (JP)
(72) Inventor: YAN, Guo-Jhih, Taipei City 10053 (TW); WU, Keng chang, Taipei City 10053 (TW); WANG, Kuo-Min, Taipei City 10053 (TW)
(74) Representative: Stöckeler, Ferdinand
(86) International application number: PCT/JP2020/037351
(87) International publication number: WO 2021/137275

(57) **Abstract**

An embodiment of the present invention provides a rotor core and a motor including the rotor core. When a rotor yoke is provided with multiple magnetic pole core groups in a circumferential direction and each magnetic pole core group includes a magnetic conductor at its center and multiple permanent magnets around the magnetic conductor, structure becomes compact and reliable as a whole, and thus another mechanical structure for maintaining rigidity of the rotor is not required. The method for manufacturing the magnetic pole core groups facilitates mass production and manufacturing without causing a cumulative error in manufacturing and assembly. The center of each magnetic pole core group is formed of the magnetic conductor, so that the number of magnets to be used can be reduced at the maximum to achieve low cost. Then, the multiple permanent magnets provided around the magnetic conductor enables increasing magnetic flux concentration effect while preventing magnetic flux leakage. Thus, both high efficiency and high performance of the motor can be achieved.

## Description

### Technical Field

The present application relates to the electric and mechanical field, and particularly relates to a rotor core and a motor including the rotor core.

### Background Art

Axial flux motors are different from general motors. The axial flux motors each have an axial direction as a magnetic flux direction, and a stator and a rotor core that are formed in a disk type. The axial flux motors have advantages such as compact structure, small volume, light weight, and high torque density.

Typical radial flux type motors are often designed such that a magnet is incorporated to achieve the effect of both high performance and high efficiency while the number of magnets to be used is reduced in response to a demand for large power or large dimensions. Unfortunately, the axial flux motors are rarely designed to incorporate a magnet due to a difference in a magnetic flux direction from general radial flux motors and a limitation by a manufacturing method.

Although some axial flux motors designed to incorporate magnets currently appear, the magnets are typically disposed in a circumferential direction in these designed motors.

It should be noted that the above introduction to the technical background merely serves to facilitate the understanding of those skilled in the art while helping to provide a clearer and more complete description of the technical idea of the present invention. The foregoing technical manners described in the technical background section of the present application should not be simply considered to be publicly known to those skilled in the art.

### Summary of Invention

Unfortunately, these conventional designs have one or more of problems as follows: a rotor has a complicated structure; another mechanical structure for maintaining rigidity of the rotor is required; magnets need to be gathered one by one in a manufacturing process; a cumulative error is likely to occur, and thus a complete rotor cannot be formed; and the axial flux motor has a three-dimensional (3D) structure, and thus a phenomenon of magnetic flux leakage still occurs around magnetic pole surfaces of the magnets.

To solve at least one of the above problems, the present invention provides a rotor core and a motor including the rotor core. When a rotor yoke is provided with multiple magnetic pole core groups in a circumferential direction and each magnetic pole core group includes a magnetic conductor at its center and multiple permanent magnets around the magnetic conductor, the structure becomes compact and reliable as a whole, and thus another mechanical structure for maintaining rigidity of the rotor is not required. A method for manufacturing the magnetic pole core groups facilitates mass production and manufacturing without causing a cumulative error in manufacturing and assembly. The center of each magnetic pole core group is formed of the magnetic conductor, so that the number of magnets to be used can be reduced at the maximum to achieve low cost. Then, the multiple permanent magnets provided around the magnetic conductor enable increasing the magnetic flux concentration effect while preventing magnetic flux leakage. Thus, both high efficiency and high performance of the motor can be achieved.

To solve at least one of the above problems, the present invention further provides a rotor core and a motor including the rotor core, in which a rotor yoke is provided with multiple magnetic pole core groups in a circumferential direction and each magnetic pole core group includes a permanent magnet at its center and multiple permanent magnets around this permanent magnet, so that the structure becomes compact and reliable as a whole, and thus another mechanical structure for maintaining rigidity of the rotor is not required. The method for manufacturing the magnetic pole core groups facilitates mass production and manufacturing without causing a cumulative error in manufacturing and assembly. Both the center and the periphery of each magnetic pole core group are formed of the permanent magnets, so that the magnetic flux concentration effect can be increased while magnetic flux leakage is prevented. Thus, high efficiency and high performance of the motor can be ensured to the maximum.

A first aspect of embodiments of the present invention provides a rotor core including: a rotor yoke formed by stacking multiple silicon steel sheets in an axial direction of the rotor yoke; and multiple magnetic pole core groups accommodated in respective accommodation holes provided in the rotor yoke in a circumferential direction of the rotor yoke. The magnetic pole core groups each include a magnetic conductor provided at a center of each magnetic pole core group and multiple first permanent magnets provided around a periphery of the magnetic conductor. The multiple first permanent magnets each have a magnetic pole direction that points radially inward or radially outward of each of the magnetic pole core groups.

According to a second aspect of the embodiments of the present invention, the multiple magnetic pole core groups include two adjacent magnetic pole core groups including the respective multiple first permanent magnets that are opposite to each other in the magnetic pole direction.

According to a third aspect of the embodiments of the present invention, the magnetic conductor has a polygonal section taken along the axial direction, and the first permanent magnets are each a rectangular parallelepiped.

According to a fourth aspect of the embodiments of the present invention, the magnetic conductor is larger in dimension in the axial direction than each of the first permanent magnets.

According to a fifth aspect of the embodiments of the present invention, the magnetic conductor protrudes from an end surface of the rotor yoke, the end surface being close to a stator in the axial direction.

According to a sixth aspect of the embodiments of the present invention, the rotor core has rotor structures in at least two layers. Each of the rotor structures of the layers includes the rotor yoke and the multiple magnetic pole core groups. The rotor core further has a spacing structure provided between adjacent rotor structures in two layers, and the spacing structure includes multiple second permanent magnets connecting magnetic conductors corresponding to the adjacent rotor structures in the two layers.

According to a seventh aspect of the embodiments of the present invention, the magnetic conductors corresponding to the adjacent rotor structures in two layers are identical or different in dimension in section taken along the axial direction.

According to an eighth aspect of the embodiments of the present invention, the magnetic conductors corresponding to the adjacent rotor structures in two layers are different in dimension in section taken along the axial direction, and each of the second permanent magnets connecting the corresponding two magnetic conductors has two end surfaces in the axial direction, the two end surfaces being different in dimension.

A ninth aspect of the embodiments of the present invention provides a rotor core including: a rotor yoke formed by stacking multiple silicon steel sheets in an axial direction of the rotor yoke; and multiple magnetic pole core groups accommodated in respective accommodation holes provided in the rotor yoke in a circumferential direction of the rotor yoke. The magnetic pole core groups each include a third permanent magnet provided at a center of each magnetic pole core group, and multiple fourth permanent magnets provided around a periphery of the third permanent magnet. The third permanent magnet has a magnetic pole direction that points to one side in the axial direction, and the multiple fourth permanent magnets each have a magnetic pole direction that points radially inward or radially outward of each of the magnetic pole core groups.

According to a tenth aspect of the embodiments of the present invention, the multiple magnetic pole core groups include two adjacent magnetic pole core groups including the multiple fourth permanent magnets that are opposite to each other in magnetic pole direction, and the multiple magnetic pole core groups include two adjacent magnetic pole core groups including the respective third permanent magnets that are opposite to each other in magnetic pole direction.

According to an eleventh aspect of the embodiments of the present invention, the third permanent magnet has a polygonal section taken along the axial direction, and the fourth permanent magnets are each a rectangular parallelepiped or a wedge-shaped cube.

According to a twelfth aspect of the embodiments of the present invention, the third permanent magnet is larger in dimension in the axial direction than each of the fourth permanent magnets.

According to a thirteenth aspect of the embodiments of the present invention, the third permanent magnet protrudes from an end surface of the rotor yoke, the end surface being close to the stator in the axial direction.

According to a fourteenth aspect of the embodiments of the present invention, the multiple magnetic pole core groups each include the multiple fourth permanent magnets close to a center hole of the rotor yoke, the multiple fourth permanent magnets being provided around the center hole.

A fifteenth aspect of the embodiments of the present invention provides a motor including the rotor core according to any one of the first to fourteenth aspects of the embodiments of the present invention.

Advantageous effects according to the embodiments of the present invention are as follows. When a rotor yoke is provided with multiple magnetic pole core groups in a circumferential direction and each magnetic pole core group includes a magnetic conductor at its center and multiple permanent magnets around the magnetic conductor, the structure becomes compact and reliable as a whole, and thus another mechanical structure for maintaining rigidity of the rotor is not required. The method for manufacturing the magnetic pole core groups facilitates mass production and manufacturing without causing a cumulative error in manufacturing and assembly. The center of each magnetic pole core group is formed of the magnetic conductor, so that the number of magnets to be used can be reduced at the maximum to achieve low cost. Then, the multiple permanent magnets provided around the magnetic conductor enables increasing the magnetic flux concentration effect while preventing magnetic flux leakage. Thus, both high efficiency and high performance of the motor can be achieved.

Alternatively, when the rotor yoke is provided with the multiple magnetic pole core groups in the circumferential direction and each magnetic pole core group includes the permanent magnet at its center and the multiple permanent magnets around this permanent magnet, the structure becomes compact and reliable as a whole, and thus another mechanical structure for maintaining rigidity of the rotor is not required. The method for manufacturing the magnetic pole core groups facilitates mass production and manufacturing without causing a cumulative error in manufacturing and assembly. Both the center and the periphery of each magnetic pole core group are formed of the permanent magnets, so that the magnetic flux concentration effect can be increased while magnetic flux leakage is prevented. Thus, high efficiency and high performance of the motor can be ensured to the maximum.

Embodiments of the present invention are disclosed in detail with reference to the following description and the accompanying drawings. It should be understood that the embodiments of the present invention are not limited in scope by the disclosure. Within the spirit and scope of the appended claims, the embodiments of the present invention include many changes, modifications, and equivalents.

Descriptions of one embodiment and/or features exhibited can be used for one or more other embodiments in an identical or similar manner, and can be combined with features of the other embodiments or switched with the features of the other embodiments.

It should be emphasized that although the terms, "including/containing/comprising" is used in the present text to indicate the presence of a feature, a body shaping member, or a part, presence or addition of one or more other features, body shaping members, or parts is not precluded.

### Brief Description of Drawings

The detailed description below in association with the accompanying drawings will clarify the foregoing and other objects, features, and advantages in the embodiments of the present invention. The accompanying drawings are as follows.

Fig. 1 is a plan view of a rotor core according to a first embodiment of the present invention.
Fig. 2 is a bottom view of the rotor core according to the first embodiment of the present invention.
Fig. 3 is a sectional view of the rotor core according to the first embodiment of the present invention.
Fig. 4 is an exploded view of a rotor core with another structure according to the first embodiment of the present invention.
Fig. 5 is an exploded sectional view of the rotor core with the other structure according to the first embodiment of the present invention.
Fig. 6 is a sectional view of the rotor core with the other structure according to the first embodiment of the present invention.
Fig. 7 is a plan view of partial structure of the rotor core according to the first embodiment of the present invention.
Fig. 8 is a front view of the partial structure of the rotor core according to the first embodiment of the present invention.
Fig. 9 is an exploded view of a rotor core with yet another structure according to the first embodiment of the present invention.
Fig. 10 is an exploded sectional view of the rotor core with the yet other structure according to the first embodiment of the present invention.
Fig. 11 is a sectional view of the rotor core with the yet other structure according to the first embodiment of the present invention.
Fig. 12 is a plan view of another partial structure of the rotor core according to the first embodiment of the present invention.
Fig. 13 is a front view of the other partial structure of the rotor core according to the first embodiment of the present invention.
Fig. 14 is a plan view of a rotor core according to a second embodiment of the present invention.
Fig. 15 is a bottom view of the rotor core according to the second embodiment of the present invention.
Fig. 16 is a sectional view of a motor according to a third embodiment of the present invention.

### Description of Embodiments

With reference to the drawings, the following description will clarify the foregoing and other features of the present invention. It should be noted that although the specification and drawings specifically disclose specific embodiments of the present invention and show some of the embodiments in which the principle of the present invention is applicable, the present invention is not limited to the described embodiments, and includes all modifications, variations, and equivalents falling within the scope of the claims appended.

In the present invention, a direction parallel to a direction extending along a center axis is referred to as an "axial direction", a radial direction centered on the center axis is referred to as a "radial direction", and a circumferential direction around the center axis is referred to as a "circumferential direction". It should be noted that the directions are defined in the present invention for convenience of description of the embodiments of the present invention, and thus do not limit directions at the time of use or manufacture of the rotor and the motor.

Hereinafter, a rotor core and a motor according to an embodiment of the present invention will be described with reference to the accompanying drawings.

### (First embodiment)

A first embodiment of the present invention provides a rotor core.

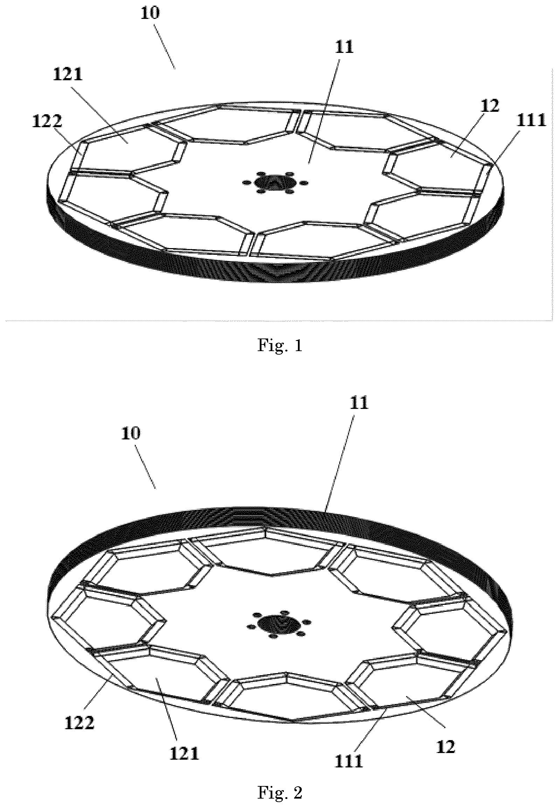

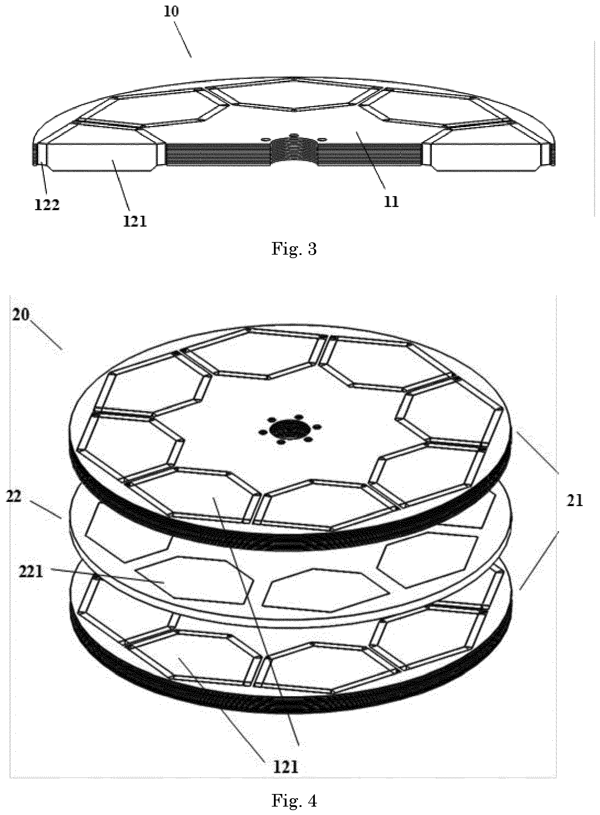

Fig. 1 is a plan view of the rotor core according to the first embodiment of the present invention. Fig. 2 is a bottom view of the rotor core according to the first embodiment of the present invention. Fig. 3 is a sectional view of the rotor core according to the first embodiment of the present invention.

As illustrated in Figs. 1, 2, and 3, a rotor core 10 includes a rotor yoke 11 formed by stacking multiple silicon steel sheets in an axial direction of the rotor yoke 11; and multiple magnetic pole core groups 12 accommodated in respective accommodation holes 111 provided in the rotor yoke 11 in a circumferential direction of the rotor yoke 11. The magnetic pole core groups 12 each include a magnetic conductor 121 provided at a center of each magnetic pole core group and multiple first permanent magnets 122 provided around a periphery of the magnetic conductor 121. The multiple first permanent magnets 122 each have a magnetic pole direction that points radially inward or radially outward of each of the magnetic pole core groups 12.

Then, when the rotor yoke 11 is provided with the multiple magnetic pole core groups 12 in the circumferential direction and each magnetic pole core group 12 includes the magnetic conductor 121 at its center and the multiple permanent magnets 122 around the magnetic conductor, the structure becomes compact and reliable as a whole, and thus another mechanical structure for maintaining rigidity of the rotor is not required. The method for manufacturing the magnetic pole core groups 12 facilitates mass production and manufacturing without causing a cumulative error in manufacturing and assembly. The center of each magnetic pole core group is formed of the magnetic conductor, so that the number of magnets to be used can be reduced at the maximum to achieve low cost. Then, the multiple permanent magnets provided around the magnetic conductor enables increasing the magnetic flux concentration effect while preventing magnetic flux leakage. Thus, both high efficiency and high performance of the motor can be achieved.

As illustrated in Figs. 1, 2, and 3, the present embodiment provides the rotor yoke 11 that is formed by stacking multiple silicon steel sheets in the axial direction. The rotor yoke 11 is provided with the multiple accommodation holes 111 in the circumferential direction, the accommodation holes 111 passing through the rotor yoke 11 in the axial direction. Then, one magnetic pole core group 12 is provided for each accommodation hole 111.

According to the present embodiment, the number of the accommodation holes 111 and the magnetic pole core groups 12, and positions of the accommodation holes 111 and the magnetic pole core groups 12 in the circumferential direction and the radial direction, may be set according to actual needs.

According to the present embodiment, two adjacent magnetic pole core groups 12 include the respective multiple first permanent magnets 122 that are opposite to each other in magnetic pole direction. For example, when the first permanent magnets 122 in one magnetic pole core group of the two adjacent magnetic pole core groups have a magnetic pole direction pointing radially inward of the one magnetic pole core group, the first permanent magnets 122 in the other magnetic pole core group have a magnetic pole direction pointing radially outward of the other magnetic pole core group.

According to the present embodiment, each magnetic pole core group 12 is identical in structure, so that the specific structure of one of the magnetic pole core groups 12 will be described below.

According to the present embodiment, the magnetic conductor 121 has a polygonal section taken along the axial direction, and a specific shape of the polygon may be set depending on actual needs.

For example, the magnetic conductor 121 has a hexagonal section taken along the axial direction as illustrated in Figs. 1 and 2.

According to the present embodiment, the first permanent magnets 122 are each a rectangular parallelepiped, and the first permanent magnets 122 each have a length equal to a dimension of each side of the magnetic conductor 121 as illustrated in Figs. 1 and 3.

This structure facilitates manufacturing of the magnetic conductor 121 and the first permanent magnets 122.

As illustrated in Fig. 3, the magnetic conductor 121 is larger in dimension in the axial direction than each of the first permanent magnets 122. For example, the magnetic conductor 121 has a surface facing the stator in the axial direction, the surface protruding from an end surface of the rotor yoke 11, the end surface facing the stator, and then the first permanent magnets 122 are flush with the end surface of the rotor yoke 11 facing the stator. Alternatively, each of the first permanent magnets 122 may have an end surface recessed to a side opposite to the stator from the end surface of the rotor yoke 11.

Then, a magnetic flux can be better guided to move toward the stator.

According to the present embodiment, the rotor core has the rotor structures in at least two layers, and the rotor structure in each layer may have the rotor yoke and the multiple magnetic pole core groups. For example, the rotor structure in each layer may have the structure illustrated in Figs. 1 to 3.

Then, providing the multilayer structure enables the motor to be further improved in efficiency and performance.

The present embodiment describes the rotor core having the rotor structure of two layers as an example.

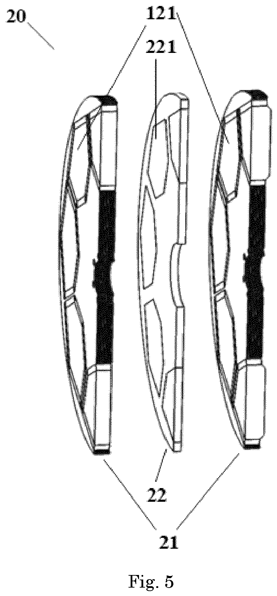

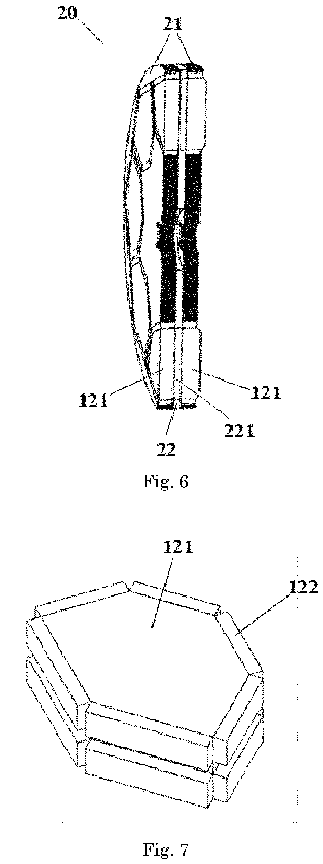

Fig. 4 is an exploded view of a rotor core with another structure according to the first embodiment of the present invention. Fig. 5 is an exploded sectional view of the rotor core with the other structure according to the first embodiment of the present invention. Fig. 6 is a sectional view of the rotor core with the other structure according to the first embodiment of the present invention.

As illustrated in Figs. 4, 5, and 6, the rotor core 20 has rotor structures 21 in two layers, and the rotor structure 21 in each layer includes the rotor yoke 11 and the multiple magnetic pole core groups 12. The rotor structure 21 in each layer is the same as the structure of the rotor core 10 illustrated in Figs. 1 to 3, and thus duplicated description of the specific structure is eliminated.

The rotor core 20 further includes a spacing structure 22 provided between the adjacent rotor structures 21 in two layers. The spacing structure 22 includes multiple second permanent magnets 221 connecting the magnetic conductors 121 corresponding to the adjacent rotor structures 21 in the two layers.

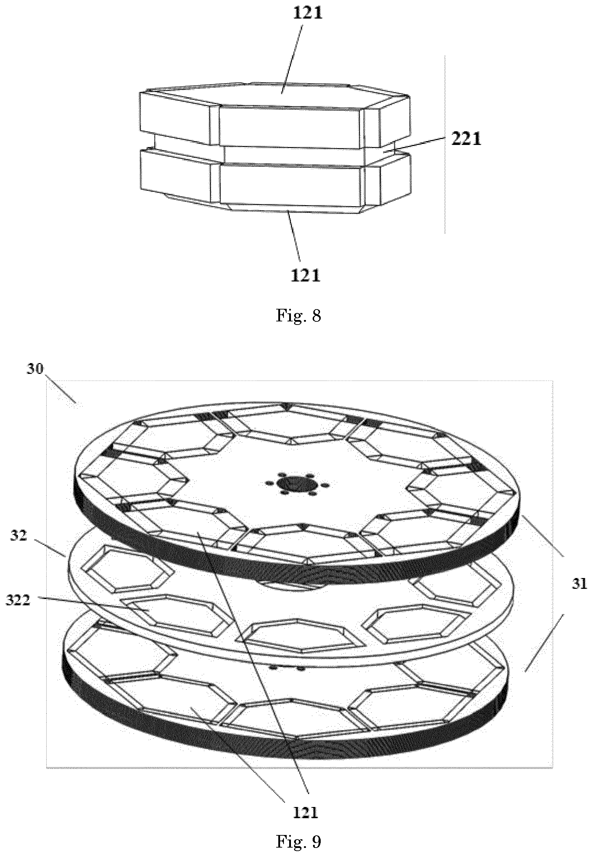

Fig. 7 is a plan view of a partial structure of the rotor core according to the first embodiment of the present invention. Fig. 8 is a front view of the partial structure of the rotor core according to the first embodiment of the present invention.

As illustrated in Figs. 7 and 8, the magnetic conductors 121 corresponding to the adjacent rotor structures 21 in the two layers are identical in dimension in section taken along the axial direction. Then, the second permanent magnet 221 connecting the corresponding two magnetic conductors 121 has two end surfaces in the axial direction that are also identical in dimension.

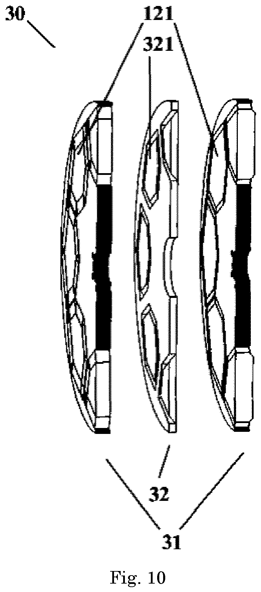

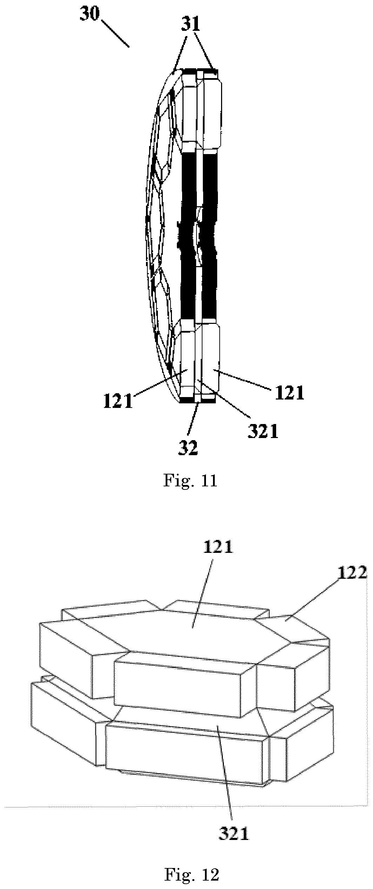

Fig. 9 is an exploded view of a rotor core with yet another structure according to the first embodiment of the present invention. Fig. 10 is an exploded sectional view of the rotor core with the yet other structure according to the first embodiment of the present invention. Fig. 11 is a sectional view of the rotor core with the yet other structure according to the first embodiment of the present invention.

As illustrated in Figs. 9, 10, and 11, a rotor core 30 has rotor structures 31 in two layers, and the rotor structure 31 in each layer includes the rotor yoke 11 and the multiple magnetic pole core groups 12. The rotor structure 31 in each layer is the same as the structure of the rotor core 10 illustrated in Figs. 1 to 3, and thus duplicated description of specific structure is eliminated.

The rotor core 30 further includes a spacing structure 32 provided between the adjacent rotor structures 31 in two layers. The spacing structure 32 includes multiple second permanent magnets 321 connecting the magnetic conductors 121 corresponding to the adjacent rotor structures 31 in the two layers.

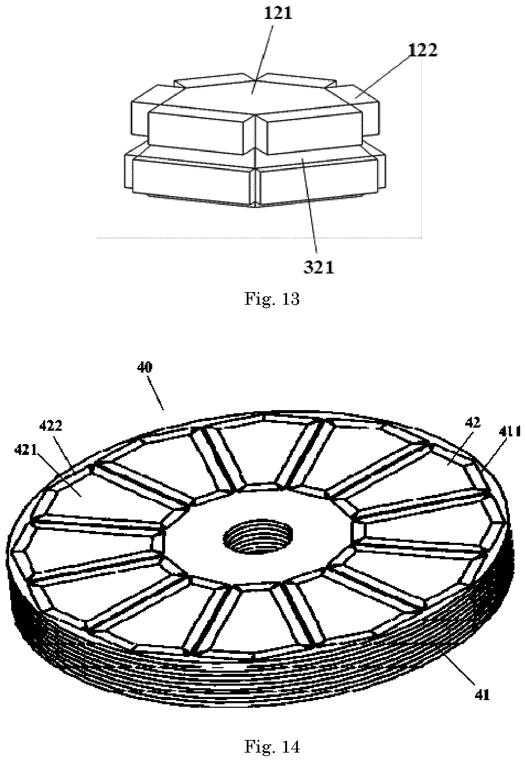

Fig. 12 is a plan view of another partial structure of the rotor core according to the first embodiment of the present invention. Fig. 13 is a front view of the other partial structure of the rotor core according to the first embodiment of the present invention.

As illustrated in Figs. 12 and 13, the magnetic conductors 121 corresponding to the adjacent rotor structures 31 in the two layers are identical in shape in section taken along the axial direction and different in dimension in the section. Then, the second permanent magnets 321 connecting the corresponding two magnetic conductors 121 have two end surfaces in the axial direction that are also different in dimension. Then, a magnetic flux can be better guided to move toward the stator.

As can be seen from the above embodiment, when the rotor yoke is provided with the multiple magnetic pole core groups in the circumferential direction and each magnetic pole core group includes the magnetic conductor at its center and the multiple permanent magnets around the magnetic conductor, the structure becomes compact and reliable as a whole, and thus another mechanical structure for maintaining rigidity of the rotor is not required. The method for manufacturing the magnetic pole core groups facilitates mass production and manufacturing without causing a cumulative error in manufacturing and assembly. The center of each magnetic pole core group is formed of the magnetic conductor, so that the number of magnets to be used can be reduced at the maximum to achieve low cost. Then, the multiple permanent magnets provided around the magnetic conductor enables increasing the magnetic flux concentration effect while preventing magnetic flux leakage. Thus, both high efficiency and high performance of the motor can be achieved.

### (Second embodiment)

A second embodiment of the present invention further provides a rotor core.

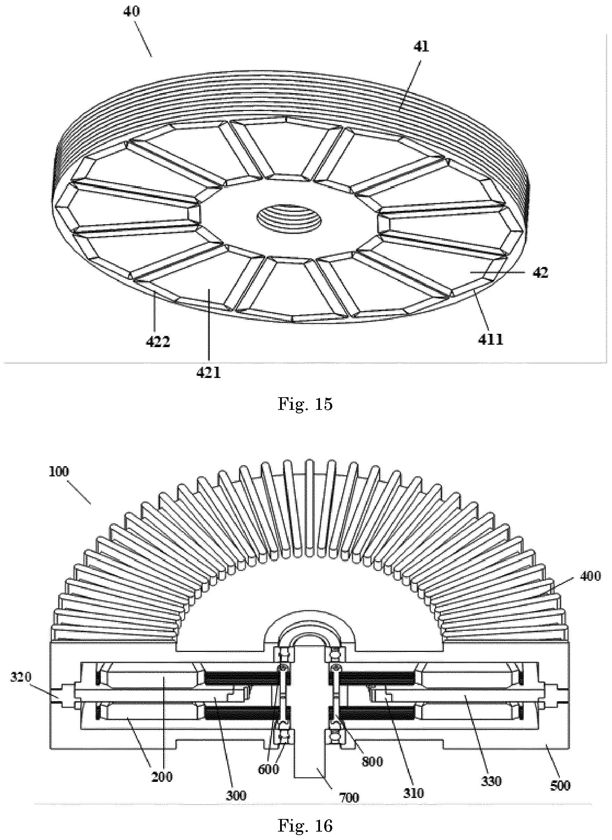

Fig. 14 is a plan view of a rotor core according to the second embodiment of the present invention. Fig. 15 is a bottom view of the rotor core according to the second embodiment of the present invention.

As illustrated in Figs. 14 and 15, a rotor core 40 includes a rotor yoke 41 formed by stacking multiple silicon steel sheets in an axial direction of the rotor yoke, and multiple magnetic pole core groups 42 accommodated in respective accommodation holes 411 provided in the rotor yoke 41 in a circumferential direction of the rotor yoke. The magnetic pole core groups 42 each include a third permanent magnet 421 provided at a center of each magnetic pole core group and multiple fourth permanent magnets 422 provided around a periphery of the third permanent magnet 421. The third permanent magnet 421 has a magnetic pole direction that points to one side in the axial direction and the multiple fourth permanent magnets 422 each have a magnetic pole direction that points radially inward or radially outward of each of the magnetic pole core groups 42.

Then, when the rotor yoke 41 is provided with the multiple magnetic pole core groups 42 in the circumferential direction and each magnetic pole core group 42 includes the permanent magnet 421 at its center and the multiple permanent magnets 422 around this permanent magnet, the structure becomes compact and reliable as a whole, and thus another mechanical structure for maintaining rigidity of the rotor is not required. The method for manufacturing the magnetic pole core groups 42 facilitates mass production and manufacturing without causing a cumulative error in manufacturing and assembly. Both the center and the periphery of each magnetic pole core group 42 are formed of the permanent magnets, so that the magnetic flux concentration effect can be increased while magnetic flux leakage is prevented. Thus, high efficiency and high performance of the motor can be ensured to the maximum.

As illustrated in Figs. 14 and 15, the present embodiment provides the rotor yoke 41 that is formed by stacking multiple silicon steel sheets in the axial direction. The rotor yoke 41 is provided with the multiple accommodation holes 411 in the circumferential direction, the accommodation holes 411 passing through the rotor yoke 41 in the axial direction. Then, one magnetic pole core group 42 is provided for each accommodation hole 411.

According to the present embodiment, the number of the accommodation holes 411 and the magnetic pole core groups 42, and positions of the accommodation holes 411 and the magnetic pole core groups 42 in the circumferential direction and the radial direction, may be set according to actual needs.

For example, the multiple magnetic pole core groups 42 each include the multiple fourth permanent magnets 422 close to a center hole 412 of the rotor yoke, the multiple fourth permanent magnets 422 being provided around the center hole 412, as illustrated Figs. 14 and 15.

According to the present embodiment, two adjacent magnetic pole core groups 42 include the respective multiple fourth permanent magnets 422 that are opposite to each other in magnetic pole direction. For example, when the fourth permanent magnets 422 in one magnetic pole core group of the two adjacent magnetic pole core groups have a magnetic pole direction pointing radially inward of the one magnetic pole core group, the fourth permanent magnets 422 in the other magnetic pole core group have a magnetic pole direction pointing radially outward of the other magnetic pole core group. The multiple magnetic pole core groups include two adjacent magnetic pole core groups including the respective third permanent magnets that are opposite to each other in magnetic pole direction.

According to the present embodiment, each magnetic pole core group 42 is identical in structure, so that the specific structure of one of the magnetic pole core groups 42 will be described below.

According to the present embodiment, the third permanent magnet 421 has a polygonal section taken along the axial direction, and a specific shape of the polygon may be set depending on actual needs.

For example, the third permanent magnet 421 has a pentagonal section taken along the axial direction as illustrated in Figs. 14 and 15.

According to the present embodiment, the fourth permanent magnets 422 are each a rectangular parallelepiped or a wedge-shaped cube, and the first permanent magnet 122 has a length equal to a dimension of each side of the magnetic conductor 122. When the fourth permanent magnet 422 is a wedge-shaped cube, no gap may be formed between two adjacent fourth permanent magnets 422. Then, magnetic flux leakage can be further prevented from occurring.

According to the present embodiment, the third permanent magnet 421 is larger in dimension in the axial direction than each of the fourth permanent magnets 422. For example, the third permanent magnet 421 has a surface facing the stator in the axial direction, the surface protruding from an end surface of the rotor yoke 41, the end surface facing the stator, and then the fourth permanent magnets 422 are flush with the end surface of the rotor yoke 41 facing the stator. Alternatively, each of the fourth permanent magnets 422 may have an end surface recessed to a side opposite to the stator from the end surface of the rotor yoke 41.

Then, a magnetic flux can be better guided to move toward the stator.

As can be seen from the above embodiment, when the rotor yoke is provided with the multiple magnetic pole core groups in the circumferential direction and each magnetic pole core group includes the permanent magnet at its center and the multiple permanent magnets around this permanent magnet, the structure becomes compact and reliable as a whole, and thus another mechanical structure for maintaining rigidity of the rotor is not required. The method for manufacturing the magnetic pole core groups facilitates mass production and manufacturing without causing a cumulative error in manufacturing and assembly. Both the center and the periphery of each magnetic pole core group are formed of the permanent magnets, so that the magnetic flux concentration effect can be increased while magnetic flux leakage is prevented. Thus, high efficiency and high performance of the motor can be ensured to the maximum.

### (Third embodiment)

A third embodiment of the present invention provides a motor including the rotor core described in the first or second embodiment. The first and second embodiments have already described the specific structure of the rotor core, and thus the contents of the specific structure may be adapted here. Hereinafter, the description will be eliminated.

According to the present embodiment, the motor may be an axial flux motor.

Fig. 16 is a sectional view of a motor according to the third embodiment of the present invention. As illustrated in Fig. 16, a motor 100 includes two rotor cores 200 aligned in the axial direction, a stator 300 provided between the two rotor cores 200 in the axial direction, an upper cover 400, a lower cover 500, a bearing 600, a center shaft 700, and a connection structure 800.

The stator 300 includes a stator inner ring 310, a stator outer ring 320, and a stator sealing resin 330, the stator sealing resin 330 containing a coil and a core.

According to the present embodiment, the rotor cores 200 each may include the structure of the rotor core described in any one of the first and second embodiments. Specific structures of the stator 300, the upper cover 400, the lower cover 500, the bearing 600, the center shaft 700, and the connection structure 800, may refer to the related art.

The foregoing has described the embodiments of the present invention in detail with reference to the accompanying drawings, and has also specified a manner in which the principles of the present invention can be used. However, it should be understood that the implementation of the present invention is not limited to the manner in the above embodiments, and further includes all modifications, corrections, equivalents, and the like within a range without departing from the gist of the present invention.

## Claims

1. A rotor core (10, 20, 30) comprising:
a rotor yoke (11) formed by stacking multiple silicon steel sheets in an axial direction of the rotor yoke (11); and
multiple magnetic pole core groups (12) accommodated in respective accommodation holes (111) provided in the rotor yoke (11) in a circumferential direction of the rotor yoke (11),
the magnetic pole core groups (12) each including:
a magnetic conductor (121) provided at a center of each magnetic pole core group (12); and
multiple first permanent magnets (122) provided around a periphery of the magnetic conductor (121), and
the multiple first permanent magnets (122) each having a magnetic pole direction that points radially inward or radially outward of each of the magnetic pole core groups (12).

2. The rotor core (10, 20, 30) according to claim 1, **characterized in that** the multiple magnetic pole core groups (12) include two adjacent magnetic pole core groups (12) including the multiple first permanent magnets (122) that are opposite to each other in the magnetic pole direction.

3. The rotor core (10, 20, 30) according to claim 1, **characterized in that** the magnetic conductor (121) has a polygonal section taken along the axial direction, and the first permanent magnets (122) are each a rectangular parallelepiped.

4. The rotor core (10, 20, 30) according to claim 1, **characterized in that** the magnetic conductor (121) is larger in dimension in the axial direction than each of the first permanent magnets (122).

5. The rotor core (10, 20, 30) according to claim 1 or 4, **characterized in that** the magnetic conductor (121) protrudes from an end surface of the rotor yoke (11), the end surface being close to a stator (300) in the axial direction.

6. The rotor core (10, 20, 30) according to claim 1, **characterized in that**
the rotor core (10, 20, 30) has rotor structures (21, 31) in at least two layers,
each of the rotor structures (21, 31) of the layers includes the rotor yoke (11) and the multiple magnetic pole core groups (12),
the rotor core (10, 20, 30) further has a spacing structure (22, 32) provided between adjacent rotor structures (21, 31) in two layers, and
the spacing structure (22, 32) includes multiple second permanent magnets (221, 321) connecting the magnetic conductors (121) corresponding to the adjacent rotor structures (21, 31) in the two layers.

7. The rotor core (10, 20, 30) according to claim 6, **characterized in that** the magnetic conductors (121) corresponding to the adjacent rotor structures (21, 31) in two layers are identical or different in dimension in section taken along the axial direction.

8. The rotor core (10, 20, 30) according to claim 7, **characterized in that**
the magnetic conductors (121) corresponding to the adjacent rotor structures (21, 31) in two layers are different in dimension in section taken along the axial direction, and
each of the second permanent magnets (221, 321) connecting the corresponding two magnetic conductors (121) has two end surfaces in the axial direction, the two end surfaces being different in dimension.

9. A rotor core (40) comprising:
a rotor yoke (41) formed by stacking multiple silicon steel sheets in an axial direction of the rotor yoke (41); and
multiple magnetic pole core groups (42) accommodated in respective accommodation holes (411) provided in the rotor yoke (41) in a circumferential direction of the rotor yoke (41),
the magnetic pole core groups (42) each including:
a third permanent magnet (421) provided at a center of each magnetic pole core group (42); and
multiple fourth permanent magnets (422) provided around a periphery of the third permanent magnet (421),
the third permanent magnet (421) having a magnetic pole direction that points to one side in the axial direction, and
the multiple fourth permanent magnets (422) each having a magnetic pole direction that points radially inward or radially outward of each of the magnetic pole core groups (42).

10. The rotor core (40) according to claim 9, **characterized in that**
the multiple magnetic pole core groups (42) include two adjacent magnetic pole core groups (42) including the multiple fourth permanent magnets (422) that are opposite to each other in the magnetic pole direction, and
the multiple magnetic pole core groups (42) include two adjacent magnetic pole core groups (42) including the respective third permanent magnets (421) that are opposite to each other in the magnetic pole direction.

11. The rotor core (40) according to claim 9, **characterized in that**
the third permanent magnet (421) has a polygonal section taken along the axial direction, and
the fourth permanent magnets (422) are each a rectangular parallelepiped or a wedge-shaped cube.

12. The rotor core (40) according to claim 9, **characterized in that** the third permanent magnet (421) is larger in dimension in the axial direction than each of the fourth permanent magnets (422).

13. The rotor core (40) according to claim 9 or 12, **characterized in that** the third permanent magnet (421) protrudes from an end surface of the rotor yoke (41), the end surface being close to the stator in the axial direction.

14. The rotor core (40) according to claim 9, **characterized in that** the multiple magnetic pole core groups (42) each include the multiple fourth permanent magnets (422) close to a center hole of the rotor yoke (41), the multiple fourth permanent magnets (422) being provided around the center hole.

15. A motor (100) comprising the rotor core (10, 20, 30, 40) according to any one of claims 1 to 14.
